# EUROPEAN PATENT SPECIFICATION

(11) **EP 0 588 865 B1**
(45) Date of publication and mention of the grant of the patent: **09.10.1996**
(21) Application number: 92911756.2
(22) Date of filing: 11.06.1992
(51) Int. Cl.: C09K 3/32, B03B 9/02, B01D 11/02

(54) **CLEANING HYDROCARBON CONTAMINATED MATERIAL**
Reinigung von mit Kohlenwasserstoff verunreinigtem Material
DEPOLLUTION DE MATERIAUX CONTAMINES PAR DES HYDROCARBURES

(30) Priority: 12.06.1991 GB 91126474
(43) Date of publication of application: 30.03.1994
(73) Proprietor: RIG TECHNOLOGY LIMITED, Aberdeen AB1 2LP (GB)
(72) Inventor: BAILEY, Marshall, Graham Larachmor, Kincardineshire AB3 3PY (GB)
(74) Representative: Nash, Keith Wilfrid
(86) International application number: GB9201053
(87) International publication number: WO9222620

(56) References cited:
- EP-A- 0 172 056
- EP-A- 0 185 831
- EP-A- 0 372 761
- WO-A-90/06795
- DE-A- 2 531 732

## Description

### Field of the invention

This invention relates to the cleaning of hydrocarbon contaminated solid materials such as for example, arising from industrial processes and from accidental discharge of hydrocarbons (usually in the form of oil or tar like substances) to the environment, in which the hydrocarbon pollutant is recovered in re-usable form.

### Background to the invention

Oil (hydrocarbon) contaminated materials are generated as by-products in a wide variety of industrial processes and also by accidental discharge of hydrocarbons to the environment.

Examples of process by-product production are the tank bottom sediments from oil storage tanks, distillation residues from hydrocarbon refining, metal millings and turnings contaminated by cutting oils, materials contaminated by oils in mineral flotation processes, oily sludges generated from waste oil and tanker cleaning operations, and accumulated deposits of oil contaminated soil resulting from multiple discharges over a protracted period on industrial sites.

Examples of wastes generated by accidental discharges of hydrocarbons are polluted shorelines resulting from oil spills, soil and ground water polluted by leakage of hydrocarbons from storage tanks and industrial processes. Again these examples may result from a single spillage or multiple spills over a longer period.

Historically, such wastes have ultimately been disposed of by means such as incineration, land fill, and to a limited extent biodegradation employing land farming or bioreactor techniques.

In recent years there has been a growing awareness of the environmental impact of the secondary pollution created by such treatments. For example, direct incineration of hydrocarbons results in the production of carbon dioxide gas, thus enhancing the so-called "greenhouse effect" resulting in global warming. If the hydrocarbon pollutant contains halogenated hydrocarbons there is a strong possibility of the production of highly toxic by-products e.g. dioxin on incineration.

Land fill, unless conducted under vigorously controlled conditions can result in the pollution of aquifers by migration of the hydrocarbons, pollution of surface waters by liquid run-off from the fill, and the production of noxious gases by degradation of the fill material or inter-reaction of fill materials.

Biodegradation of hydrocarbon polluted soils is generally limited to materials having low concentration of hydrocarbon pollutant due to the excessive times required to degrade hydrocarbons when present in appreciable quantity. The bio systems are very susceptible to poisoning, and the intermediate hydrocarbons formed during the biodegradation process may be significantly more toxic than the original pollutant.

In all the above mentioned processes the hydrocarbons are destructed either partially or completely and any inherent values are lost. Further, all the processes either directly or indirectly, are net users of energy and may be considered to give rise to secondary pollution in the energy generating process.

The present invention aims to provide a novel method of, and apparatus for, the cleaning of hydrocarbon contaminated materials which is capable of overcoming the disadvantages of known cleaning systems, and which is capable of recovering component materials in re-usable form, if so required. Further, the treatment may be conducted at the site of the pollution, thus avoiding expensive and potentially hazardous transport, and the treatment is also very energy efficient.

The invention also provides for a method for the treatment of mixtures of oil, water (including salt solutions), and solids present in various forms of oil mixtures e.g. emulsions, dispersions and the like.

The invention is applicable to the removal of hydrocarbon contamination from combinations of solids and oil(s); solids, oil(s), aqueous component(s); and the other chemicals in water or oil phases.

The solids may be organic or inorganic or combinations thereof.

The liquid phase(s) may be mixtures or dispersions of emulsions or any combination thereof.

### Summary of the invention

According to the present invention a method for removing hydrocarbons from contaminated solids comprises exposing the solids to a solvent and thereby dissolving the hydrocarbons in the solvent, and separating the solids from the solvent with the oil dissolved therein.

The solvent may be separated from the hydrocarbon by selective evaporation and condensation leaving contaminated hydrocarbon and solvent in re-usable form.

The solvent used is preferably completely miscible with the hydrocarbon pollutant, but generally immisible with water.

The solvent should also preferably have a boiling point which is significantly lower than that of the pollutant hydrocarbon and higher than normal ambient temperatures.

By way of example, without implying limitation, solvents such as hexane, heptane and commercial mixtures of these may be used.

The solvent may also be constituted by a normal industrial process stream and, after extraction of the hydrocarbon pollutant, the solvent and/or solvent/hydrocarbon liquids may be returned to the industrial process plant as a process stream. As an example of this, refinery wastes may be treated by a solvent constituting a normal refinery process stream e.g. naptha and thereafter the solvent/hydrocarbon liquid returned as a refinery process feed stream.

The hydrocarbon polluted solids should preferably have a particle size of less than 25mm, and a density which is sufficiently different from that of the solvent/hydrocarbon liquid produced on extraction, such that the solids and solvent/hydrocarbon liquids may be separated by gravity. If initially present in larger sizes than preferred 25mm, the larger solids may be separated and comminuted by established means e.g. screening, crushing, incineration, as a pre-treatment to attain the preferred size distribution.

The solvent and the polluted solids are preferably exposed to the solvent in an extractor chamber through which the cuttings and solvent pass in opposite directions in a continuous process, the solids being fed into an inlet end of the extractor chamber and exiting from an outlet end thereof, with the solvent discharge being collected at the inlet end of the extractor chamber, cleaned and then recirculated back to the outlet thereof. This ensures that the cleanest solvent contacts the solids at the outlet end of the extractor chamber.

The solids are conveniently fed through the extractor chamber by means of a perforated conveyor belt and the solvent may be sprayed into the extractor chamber at the outlet end thereof.

The extractor chamber is conveniently divided into a plurality of compartments through which the solids are transported in succession by the belt, the solvent being extracted at the base of each compartment and being pumped to the adjacent compartment into which the solvent is sprayed. In each compartment, the solvent is preferably allowed to filter through the solids and belt and is then collected in a sump at the base of the compartment.

The solids obtained from the outlet end of the extractor chamber will retain a certain amount of solvent and absorbed water. To remove these, the solids thus obtained are preferably fed to a dryer unit which removes the solvent, leaving clean solids having a hydrocarbon content typically not greater than 1% by weight.

The solvent discharge from the extractor chamber normally contains fine solids, in addition to pollutant/solvent and water. The pollutant/solvent and water may be in the form of an emulsion.

In one method, the fine solids are separated from the emulsion which is then delivered to an evaporator in which the emulsion is broken down into an oil component and a solvent plus water vapour component. Fine solids may be extracted, as by gravity separation, either upstream or downstream of the evaporator. However, the high latent heat of the evaporated water demands a great deal of energy for this process.

To overcome this problem, in another preferred method, the emulsion is broken down by a demulsification process in which the fine solids and the emulsion are exposed to a demulsifying agent which effects separation into a fine solids component, an oil/solvent component and a water component. In both methods the solvent is preferably recovered, together with solvent from the dryer unit, and recirculated to be fed into the extractor chamber.

In the modification of the method, an alternative extracting means is employed, comprising an agitated vessel to which the polluted solids and the solvent are added, and the resultant solids/solvent slurry is then fed, for example by a positive displacement pump, to a centrifuge, preferably a solid bowl decanting centrifuge.

Typically the solvent used in any of the described methods/apparatus has a boiling point above 50°C but below the boiling point of the hydrocarbon contamination. If possible the solvent should be one which is degradable by naturally occurring bacteria and/or by naturally occurring radiation such as ultraviolet radiation.

According to a further feature of the invention, water may be added to the solids/solvent slurry prior to centrifuging. This reduces the amount of oil and solvent carried through with the solids, and avoids any requirement to heat the solids phase prior to its discharge.

According to a further feature of the invention mixtures of oil emulsions and solids may be efficiently separated into respective cleaned components by mixing with a suitable solvent in a mixing vessel whereby the action of the solvent breaks the oil/water emulsion, thus releasing these components from each other, and further removes the oil from the surface of the solids, thus allowing the water to be removed by association with the solids on centrifugal separation of the phases. Removal of the water with the solids thus reduces the amount of water transported to the evaporator and hence the energy requirement of the process.

As a further refinement dry water absorbing or water attracting or merely capable of being wet by water solids, for example, ground clay, may be added to the oil emulsion/solids/solvent mixture to provide sufficient solid matter to absorb or attract all the water released from the emulsions, prior to centrifugal separation.

Solids may be removed by for example a solid bowl decanting centrifuge or a disc stack centrifuge as appropriate.

The invention also lies in a method of removing hydrocarbons from hydrocarbon contaminated material containing inter alia solids hydrocarbons and water comprising the steps of:
(1) adding solvent to dissolve the hydrocarbon components,
(2) centrifuging the mixture to substantially separate the mixture of materials into a first phase containing predominantly solids and water and a second phase containing predominantly solvent and oil:
(3) heating the second phase materials to drive off the solvent and any water present to thereby substantially separate the hydrocarbon components from the remainder of the second phase materials, and
(4) condensing the solvent to facilitate its recovery.

The method my comprise the additional steps of separating the liquid from the solids making up the first phase materials, heating the separated solids to drive off any solvent and water remaining therein and condensing the evaporate so produced.

The evaporate driven off during the heating of the first phase materials may be mixed with the evaporate produced by the heating of the second phase materials before the condensing step is performed.

Any water recovered from the condensing step may be purified before discharge.

The contaminated solids may be exposed to the solvent in an agitating vessel from which the resultant slurry of solids and liquid is pumped to a centrifuge.

The slurry may include a demulsifying agent.

The centrifuge may be a solid bowl decanting centrifuge.

Water may be added to the solids/solvent slurry prior to centrifuging.

The solvent may be Toluene or a stabilised gasoline fraction.

The invention also lies in apparatus for removing hydrocarbon components from hydrocarbon contaminated materials containing inter alia solids, hydrocarbon and water comprising:
(a) means for mixing the contaminated materials with a solvent which will dissolve the hydrocarbon components and form a slurry;
(b) a centrifuge;
(c) means for conveying the slurry to the centrifuge, the latter being adapted to substantially separate the more dense solids and water from the less dense solvent and hydrocarbon mixture, and delivering the solids and water to a first outlet and the predominantly solvent and hydrocarbon mixture to a second outlet;
(d) first heating means to which the mixture of materials from the second outlet is fed and wherein the said mixture is heated to drive off as an evaporate the solvent and any water and leave predominantly the hydrocarbons;
(e) collection means to which the hydrocarbons are conveyed;
(f) condensing means to which the evaporate is supplied and from which the solvent and any water are collectable; and
(g) collection means for at least the solvent condensate.

The mixing means may include means for agitating the contaminated materials to improve the mixing thereof with the solvent.

The apparatus may further comprise second heating means for heating at least the solid content of the mixture from the first centrifuge outlet to drive off any solvent and water remaining therein, and means for condensing the evaporate.

The apparatus may further comprise means for combining evaporates from the first and second heating means to feed the combined evaporates to a common condensing means.

The apparatus may further comprise purification means for purifying the water recovered from the condensing means.

The invention also lies in a method in which the contaminated materials are exposed to the solvent in an extractor chamber through which the materials and solvent pass in opposite directions in a continuous process, the materials being fed into an inlet end of the extractor chamber and exiting from an outlet end thereof, with the solvent discharge being collected at the inlet end of the extractor chamber, being cleaned and then recirculated back to the outlet end of the extractor chamber.

The invention also lies in a method in which the solid materials obtained from the outlet end of the extractor chamber are fed to a dryer unit which removes the solvent and leaves clean solid material.

### Description of Embodiments

The invention will now be described, by way of example, with reference to the accompanying drawings, in which the nine Figures show different cleaning methods embodying the invention.

In the first three examples although water is shown as being added before liquids/solids separation, it is to be understood that this is optional.

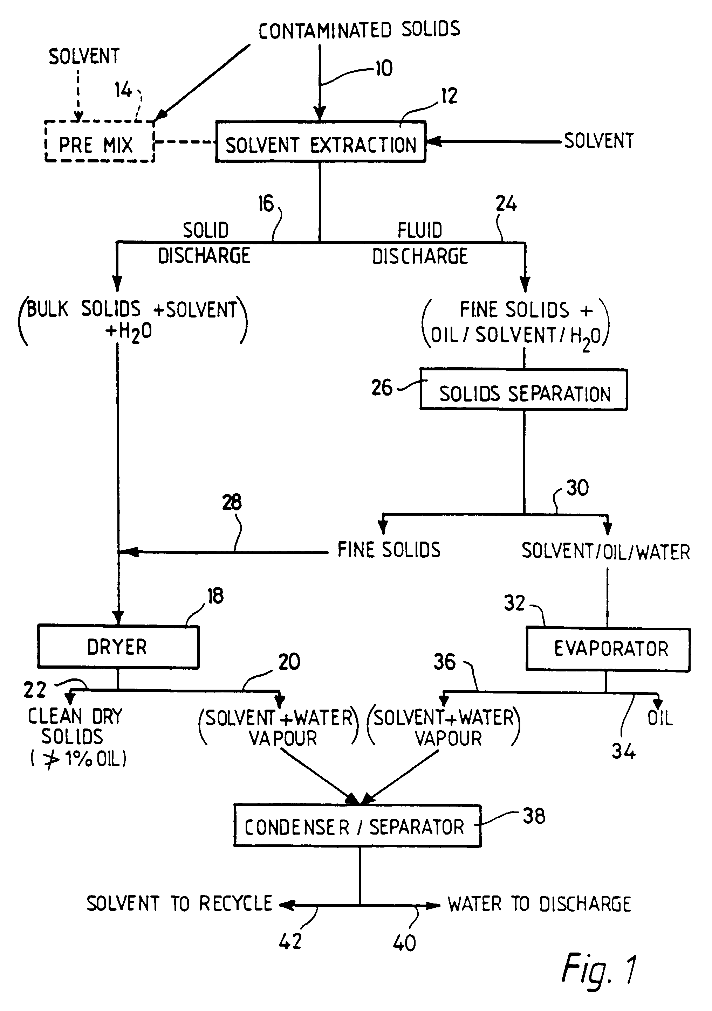

Referring first to Figure 1, polluted solids are fed as indicated by arrow 10 into an extractor in which hydrocarbon pollutant is extracted (as indicated at 12) by the application of a solvent. Instead of being fed directly into the extractor, the solids may optionally be pre-mixed with the solvent to present a slurry feed to the extractor, as shown at 14.

The extractor consists of a closed chamber, separated into a plurality of compartments. A continuous fine mesh belt conveys the solids from an inlet end of the extractor, through the compartments in turn and discharges the solids from an outlet end of the extractor into a hopper. Clean solvent is sprayed onto the solids in the compartment at the outlet end of the extractor, the solvent filtering through the solids and belt and being collected in a sump at the base of the compartment. This solvent is then recirculated by means of a pump to the adjacent compartment immediately upstream (in relation to the direction of movement of the solids through the extractor) and the process repeated. Solvent and solids are therefore transported in mutually opposite directions through the extractor, with the cleanest solvent contacting the cleanest solids at the outlet end of the extractor.

The bulk solids discharged from the extractor at 16 will still be wet, ie they will contain solvent and any water absorbed into the particles of the solids. These solids are therefore transferred to a drier 18 where the solvent is evaporated at 20 and the clean dry solids discharged at 22, where the hydrocarbon content of the solids is typically not greater than about 1% by weight.

The fluid discharge 24 from the extractor consists of fine solids plus water and an oil emulsion dissolved in the solvent. Fine solids are removed at 26 by, for example, a decanting centrifuge and are fed at 28 into the bulk solids which are supplied to the drier 18. The liquid phase 30 from the centrifuge is transferred to an evaporator 32 where solvent and water are evaporated from the oil. The oil is recovered at 34 as a useable product and the solvent plus water vapour 36 is combined with the solvent and water vapour 20 from the drier unit 18 and fed into a condenser/separator 38 where the vapours are condensed. Condensed water and solvents separate by gravity, the water being discharged at 40 and the solvent being re-cycled at 42 back to the extractor at 12.

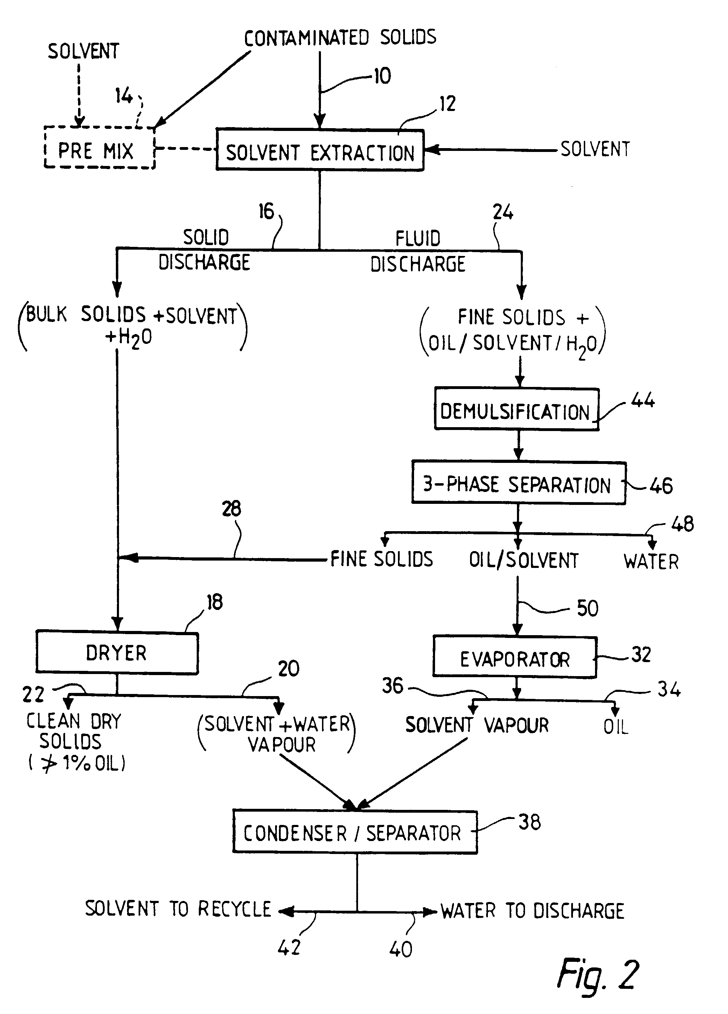

In the modified process shown in Figure 2, equivalent process steps bear the same reference numerals as used in Figure 1. The process is similar except that the fluid discharge 24 from the extractor is subjected to demulsification in order to separate water from the oil/solvent. Hence, the fine solids plus the oil/solvent and water are fed to a demulsification unit 44 where they are exposed to a demulsifying agent. The fluid mixture is then transferred to a three phase separator unit 46, for example a disc stack centrifuge, where wet solids, oil/solvent and water are separated. As before, the fine solids 28 are reunited with the bulk solids which are fed to the drier 18, and water is discharged at 48 via a separate treatment system if required. The oil/solvent solution 50 is transferred to the evaporater 32, but this will require less energy than in the evaporator 32 of Figure 1 because a large amount of water has been removed at 48 as a result of the demulsification and subsequent separation.

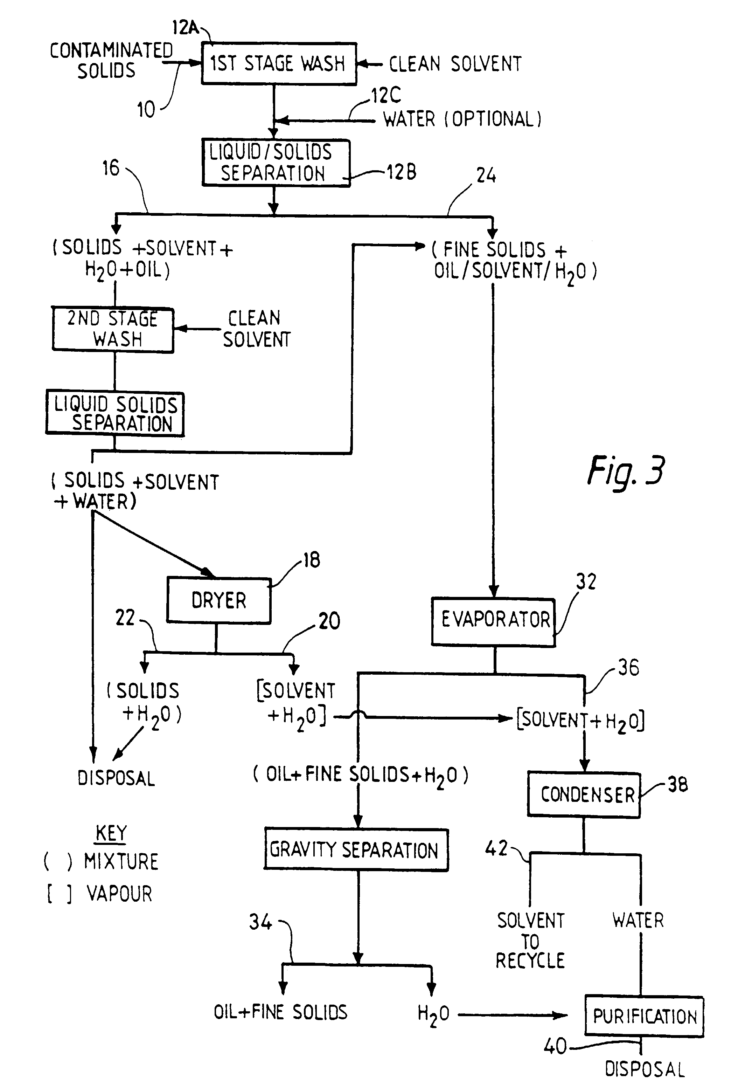

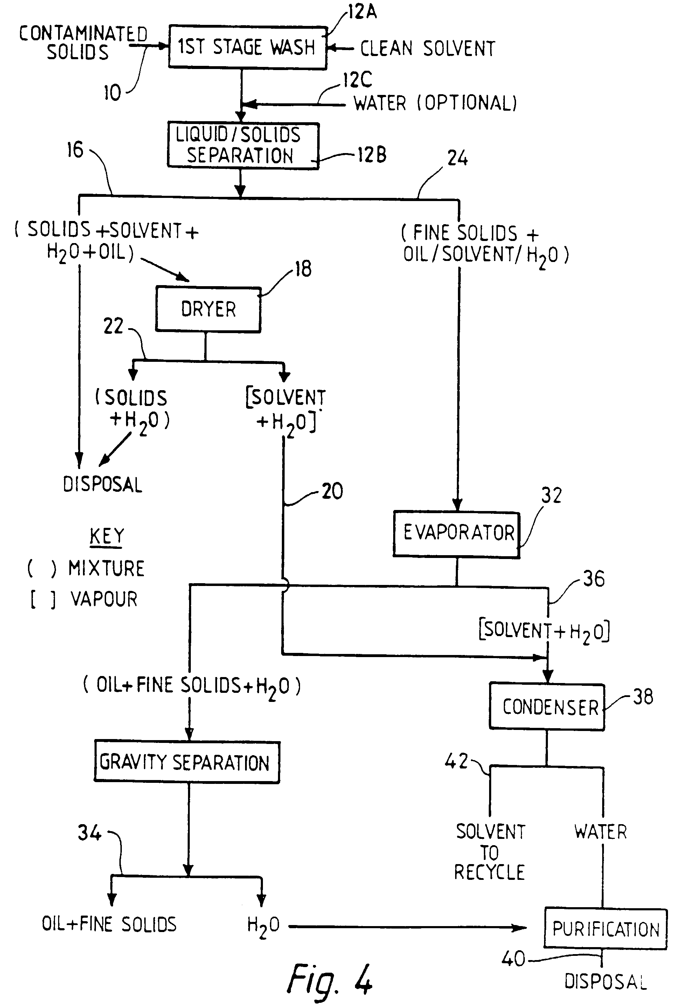

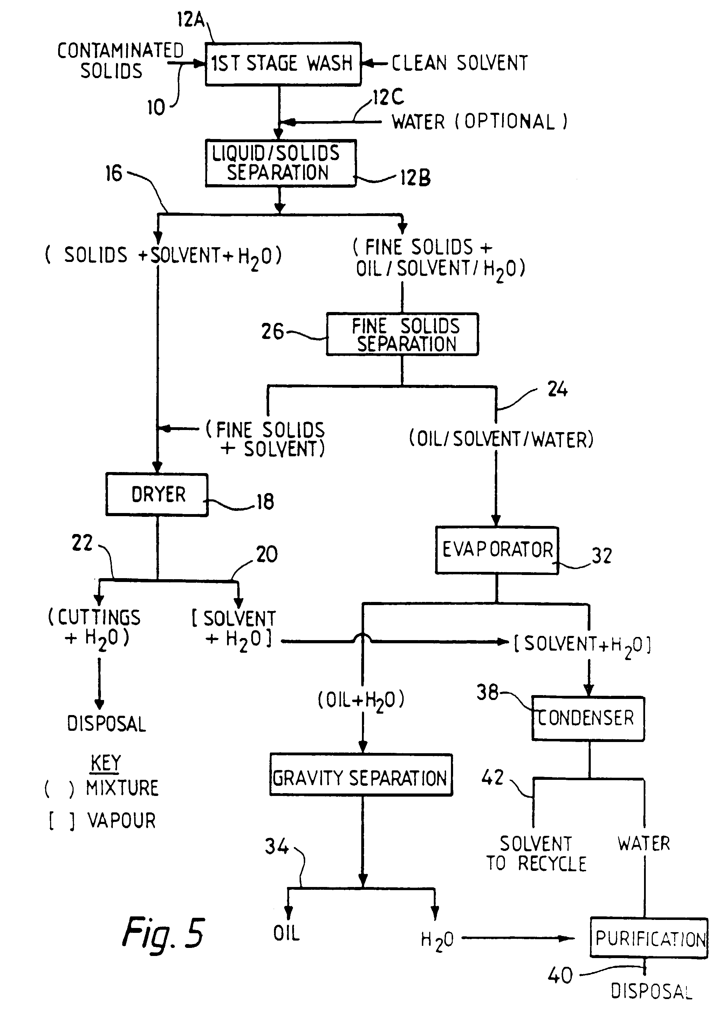

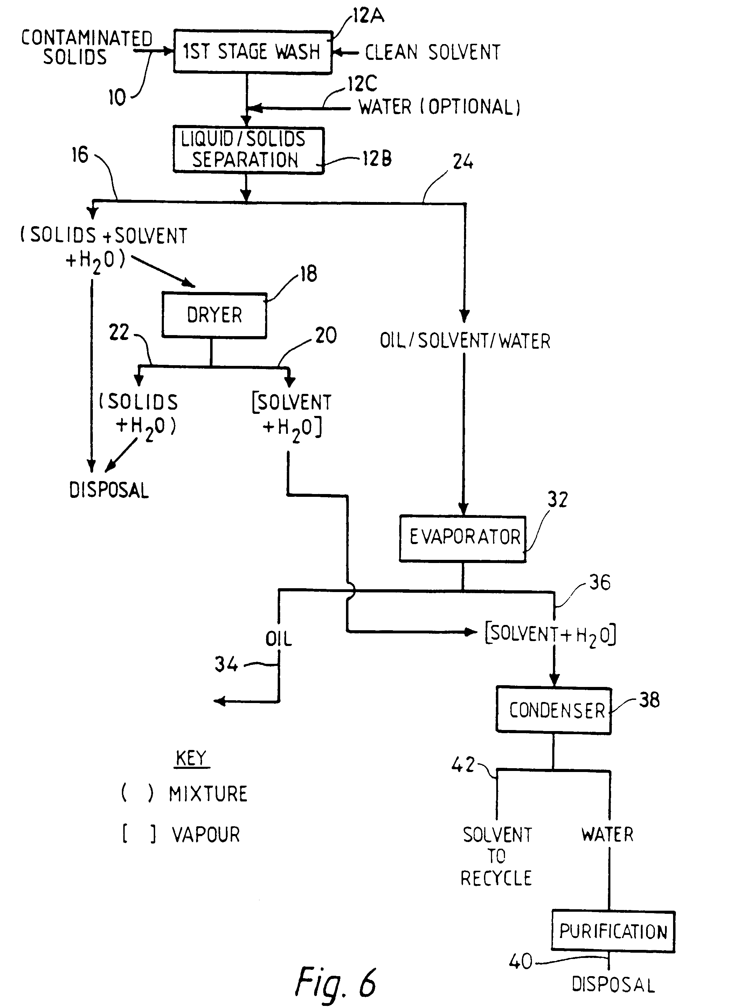

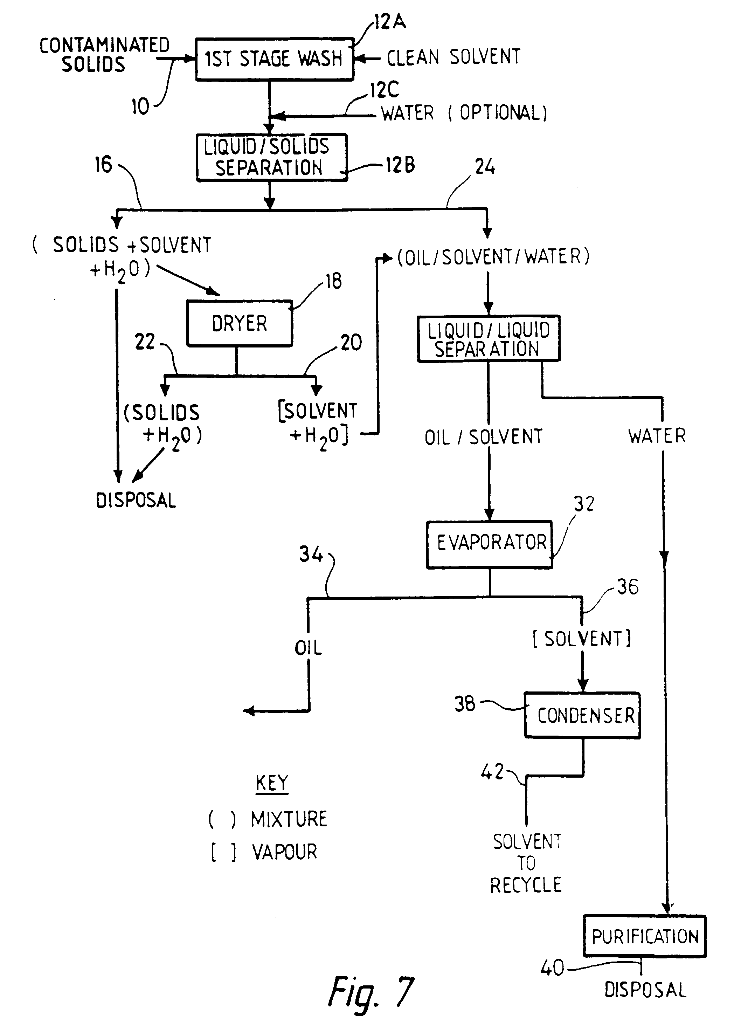

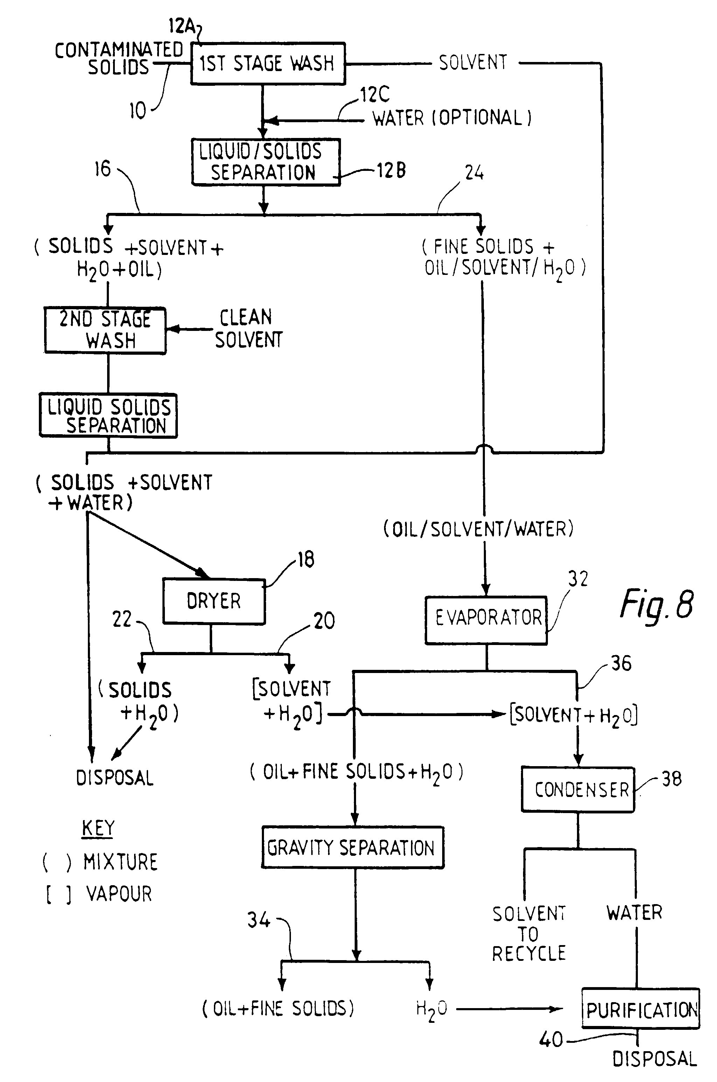

In the methods illustrated in Figures 3 to 8, the same reference numerals are again used for the process steps equivalent to those of Figures 1 and 2.

Referring to the drawings collectively, polluted solids are fed as indicated by arrow 10 into an extracting means, in which oil is extracted (as indicated at 12A, 12B) by the application of a solvent.

The solids discharged from the extracting means at 16 will be wet, ie they will contain solvent and any water absorbed into the solid particles. These solids, possibly after second stage washing, are transferred to a drier 18 where the solvent is evaporated (at 20) and the clean solids discharged at 22.

The fluid discharge 24 from the extracting means again consists of fine solids plus a solution of water in oil emulsion dissolved in the solvent. Fine solids may be removed at 26 by, for example, a decanting centrifuge. After optional fine solids removal, the fluid discharge 24 is transferred to an evaporator 32 where the solvent and water are evaporated from the oil. The oil is recovered at 34 as a usable product and the solvent plus water vapour 36, possibly combined with the solvent and water vapour 20 from the drier unit 18, is fed into a condenser/separator 38 where the vapours are condensed. Condensed water and solvents separate by gravity, the water being discharged at 40 and the solvent being re-cycled at 42 back to the extractor.

Two examples of the invention, practised in accordance with the methods of any one of Figures 3 to 8, are as follows:-

### EXAMPLE 1

In one series of tests, mineral oil contaminated solids of average composition 80.6% w/w solids, 10.0% w/w water, and 9.4% w/w oil were added at the rate of 6.2 tonnes per hour to an agitated vessel 12A into which was also added a solvent at the rate 7.0 m³ per hour. The solvent used in this case was a stabilised gasoline fraction ex BP Refinery, Grangemouth.

The average residence time of the solids in the vessel was 1 minute, and the temperature was 21°C.

The resultant solids/solvent slurry was fed at the rate of 10 m³, via a positive displacement pump, into a solid bowl decanting centrifuge 12B. The centrifuge effected solids/liquid separation to yield a centrate (solvent) phase of average composition 88.3% w/w solvent, 10.4% w/w oil, and 1.1% w/w water. Solids phase exiting the centrifuge had an average composition of 84.9% w/w dry solids, 0.9% w/w oil, 9.2% w/w water, and 5.0% w/w solvent.

The oil dissolved in the solvent phase was recovered by evaporation of the solvent which was subsequently condensed and recovered for re-use. The resultant oil phase, containing 5.1% w/w water and 1.0% w/w residual solvent was considered suitable for re-use.

Solids exiting from the centrifuge were heated to effect evaporation of associated solvent, which was subsequently recovered by condensation. Solids discharged from the dryer unit had an average composition of 89.36% w/w dry solids, 0.95% w/w oil, 9.48% w/w water, and 0.21% w/w solvent.

### EXAMPLE 2

The procedure as described in Example 1 above was repeated, using the same ratios and composition of oil contaminated solids and solvent, but with the addition of water at the rate of 500 litres per hour to the solids/solvent slurry immediately prior to centrifuging, as indicated at 12C in Figures 3 to 8.

The resultant centrate (solvent) phase from the centrifuge 12B had a composition of 86.5% w/w solvent, 9.7% w/w oil, and 3.8% w/w water. Water was allowed to separate by gravity in an intermediate tank and discharged to drain. Solvent was removed by evaporation and subsequently recondensed to yield a fluid of composition of 99.6% w/w solvent and 0.4% w/w water, which was recycled back to the process. Residual oil phase remaining in the evaporator had a composition of 97.0% w/w oil, 2.1% w/w water, and 0.9% w/w solvent, and was considered suitable for re-use.

Solids phase exiting from the centrifuge had an average composition of 82.9% w/w solids, 14.8% w/w water, 0.8% w/w oil, and 1.5% w/w solvent indicating that the addition of water to the centrifuge feed slurry had resulted in a significant lowering of solvent carry through with solids. In this case it was considered that no further solvent removal by heating of the solids phase was necessary prior to discharge.

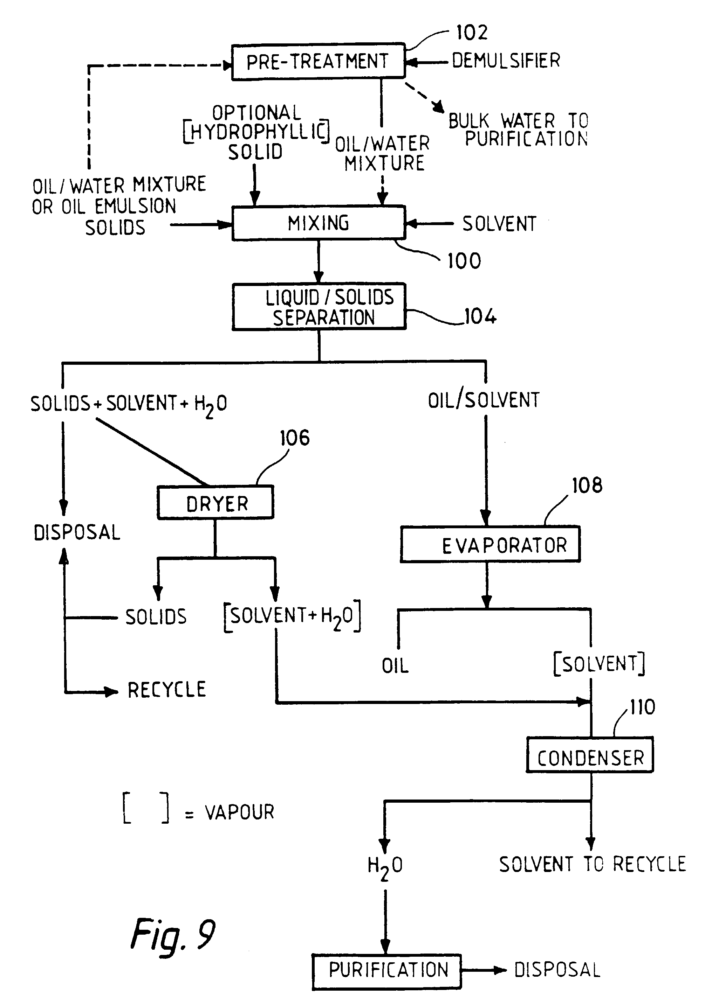

Figure 9 shows a process of which oil/water mixture or an oil emulsion plus solids are mixed with a solvent in mixer 100 either directly or after pre-treatment in 102 with a demulsifier. Bulk water from 102 is returned for purification and the oil/water mixture supplied to the mixer 100 with or without the addition of water absorbing/attracting solid material such as ground clay.

Liquids/solids separation by gravity and/or by centrifuging is achieved at 104 such that solids and solvent of water passes one way and oil and solvent passes the other. The first group are dispersed as solids and the solvent/water recycled - but if first dried in 106 to remove the solvent/water, the dried solids are more free of solvent. The evaporated solvent/water may be transferred at a later stage of processing.

The oil/solvent output for 104 is evaporated by 108 to separate oil (which can be recovered) from the solvent which after mixing with the solvent/water mixture from 106, is condensed in 110 to yield solvent for recycling and water which can be purified for disposal.

## Claims

1. A method of recovering a solvent from a process in which the solvent is used to separate hydrocarbon contamination from water-wet solids (10), at least some of which are water absorbent, and in which the solvent is a hydrophobic solvent having a density less than 1 and a boiling point less than 100°C and hydrocarbons being soluble therein, the solvent being added to the mixture of water-wet solids (14), characterised in that the solids and water are separated from the solvent (including dissolved hydrocarbons) without the addition of a surfactant by means of a decanting centrifuge (26, Figures 1 and 5) or like separating process so that one phase contains all the solvent and hydrocarbons dissolved therein and the other phase contains the solids and the water, and in that the recovery of the solvent is achieved by heating the solvent containing dissolved hydrocarbons in an evaporator (32) so as to evaporate the solvent and separate the hydrocarbons therefrom, condensing (38) the evaporated solvent vapour and recovering the solvent liquid (42) for reuse.

2. A method according to claim 2 in which the solvent is continuously recycled (42), and further comprising the step of collecting the separated hydrocarbons for drying (18) and further processing.

3. A method according to claim 2 or claim 3 further comprising the step of adding water (12c) to the said mixture prior to centrifuging (26).

4. A method according to any one of claims 2 to 4 in which said one phase is fed to a demulsification unit (44) where it is exposed to a demulsifying agent.

## Patentansprüche

1. Verfahren zum Wiedergewinnen eines Lösungsmittels aus einem Vorgang, bei dem das Lösungsmittel zum Trennen von Kohlenwasserstoff-Verunreinigungen aus wasserbenetzten Feststoffen (10) verwendet wird, von denen mindestens einige wasserabsorbierend sind, bei dem das Lösungsmittel ein hydrophobes Lösungsmittel mit einer Dichte kleiner als 1 und einem Siedepunkt niedriger als 100° C ist sowie Kohlenwasserstoffe darin lösbar sind, und dem das Lösungsmittel dem Gemisch von wasserbenetzten Feststoffen (14) beigegefügt wird, **dadurch gekennzeichnet**, daß die Lösungsmittel und das Wasser von dem Lösungsmittel (einschließlich aufgelöster Kohlenwasserstoffe) ohne Hinzufügung eines Schaumerzeugers mit Hilfe einer Dekantier-Zentrifuge (26, Figuren 1 und 5) oder eines entsprechenden Trennvorganges getrennt werden, so daß eine Phase das gesamte Lösungsmittel und darin aufgelöste Kohlenwasserstoffe, und die andere Phase die Feststoffe und das Wasser enthält, und daß das Wiedergewinnen des Lösungsmittels durch Erhitzen der Lösungsmittel enthaltenden aufgelösten Kohlenwasserstoffe in einem Verdampfer (32) erreicht wird, so daß das Lösungsmittel verdampft wird und die Kohlenwasserstoffe daraus abgetrennt werden, der verdampfte Lösungsmitteldampf kondensiert (38) und die Lösungsmittel-Flüssigkeit (42) zur erneuten Benutzung wiedergewonnen wird.

2. Verfahren nach Anspruch 1, dadurch gekennzeichnet, daß das Lösungsmittel kontinuierlich recycelt (42) wird, und die getrennten Kohlenwasserstoffe zum Trocknen (18) und weiteren Verarbeiten gesammelt werden.

3. Verfahren nach Anspruch 1 oder 2, dadurch gekennzeichnet, daß Wasser dem Gemisch vor dem Zentrifugieren (26) hinzugefügt wird (12c).

4. Verfahren nach einem der Ansprüche 2 - 4, dadurch gekennzeichnet, daß die eine Phase in eine Demulgiereinheit (44) eingeführt wird, wo sie einem Demulgiermittel ausgesetzt wird.

## Revendications

1. Méthode de récupération d'un solvant d'un traitement au cours duquel ce solvant est utilisé pour séparer des hydrocarbures polluants de solides humidifiés, dont quelques uns au moins sont hydrophiles, dans lequel le solvant est un hydrophobe ayant une densité inférieure à 1 et un point d'ébullition inférieur à 100°C, les hydrocarbures étant solubles dans celui-ci, le solvant étant ajouté au mélange de solides humidifiés (14), caractérisée en ce que les solides et l'eau sont séparés du solvant (contenant les hydrocarbures dissous) sans l'addition d'un agent tensioactif, au moyen d'une centrifugeuse de décantation (26, figures 1 et 5), ou traitement de séparation similaire, de sorte qu'une phase contient tout le solvant et les hydrocarbures dissous dans celui-ci et l'autre phase contient les solides et l'eau, et en ce que la récupération du solvant est réalisée en chauffant le solvant contenant les hydrocarbures dissous dans un évaporateur (32), de façon à faire évaporer le solvant et séparer les hydrocarbures de celui-ci, en condensant (38) les vapeurs de solvant évaporé et en récupérant le solvant liquide (42) pour réutilisation.

2. Méthode selon la revendication 1, selon laquelle le solvant est recyclé de façon continue (42), et comprenant de plus l'étape consistant à recueillir les hydrocarbures séparés pour séchage (18) et traitement ultérieur.

3. Méthode selon les revendications 1 ou 2, comprenant de plus l'étape consistant à ajouter de l'eau (12c) audit mélange avant la centrifugation (26).

4. Méthode selon l'une quelconque des revendications 1 à 3 dans laquelle ladite première phase alimente une unité de désémulsion (44) dans laquelle elle est exposée à un agent désémulsionnant.
